# EUROPÄISCHE PATENTSCHRIFT

(11) **EP 3 463 239 B1**
(45) Veröffentlichungstag und Bekanntmachung des Hinweises auf die Patenterteilung: **05.10.2022**
(21) Anmeldenummer: 17724569.3
(22) Anmeldetag: 22.05.2017
(51) Int. Cl.: A61G 5/08, A61G 5/10

(54) **MOBILITÄTSHILFE**
MOBILITY AID
AIDE À LA MOBILITÉ

(30) Priorität: 26.05.2016 DE 102016109755
(43) Veröffentlichungstag der Anmeldung: 10.04.2019
(73) Patentinhaber: Otto Bock Mobility Solutions GmbH, 07426 Königsee-Rottenbach (DE)
(72) Erfinder: HILDEBRAND, Dmitrij, 76332 Bad Herrenalb (DE); DÖRING, Florian, 99089 Erfurt (DE)
(74) Vertreter: Gramm, Lins & Partner Patent- und Rechtsanwälte PartGmbB
(86) Internationale Anmeldenummer: PCT/EP2017/062214
(87) Internationale Veröffentlichungsnummer: WO 2017/202745

(56) Entgegenhaltungen:
- EP-A2- 2 106 777
- FR-A1- 2 948 559
- FR-A1- 2 948 559
- US-A- 3 736 021
- US-A- 4 934 722

## Beschreibung

Die Erfindung betrifft eine Mobilitätshilfe mit einem ersten Rahmenelement, einem zweiten Rahmenelement und wenigstens einem Schwenkelement, das mit dem ersten Rahmenelement verbunden ist und an dem zweiten Rahmenelement um eine Schwenkachse schwenkbar gelagert ist, wobei das Schwenkelement relativ zu dem zweiten Rahmenelement in eine Gebrauchsposition und in eine Transportposition bringbar ist, wobei eine erste Verriegelungseinrichtung das Schwenkelement relativ zu dem zweiten Rahmenelement verriegelt, wenn sich das Schwenkelement in der Gebrauchsstellung befindet, und eine zweite Verriegelungseinrichtung das erste Rahmenelement relativ zu dem zweiten Rahmenelement verriegelt, wenn sich das Schwenkelement in der Transportstellung befindet.

Mobilitätshilfen sind aus dem Stand der Technik seit langem bekannt und dienen dazu, Personen mit eingeschränkter Mobilität zu unterstützen. Unter einer Mobilitätshilfe werden insbesondere Rollstühle, Rollatoren, Buggys und andere Vorrichtungen verstanden.

Insbesondere für den Transport, beispielsweise im Kofferraum eines Kraftfahrzeuges ist es bekannt, die Mobilitätshilfe zusammenzuklappen oder zu falten, um ein geringeres Packmaß zu erreichen, so dass die Mobilitätshilfe einfach transportiert werden kann. Um dies zu erreichen sind aus dem Stand der Technik eine Vielzahl unterschiedlicher Lösungen bekannt, bei denen beispielsweise eine Rückenlehne eines Rollstuhles relativ zur Sitzfläche des Rollstuhls verschwenkt werden kann. Gattungsgemäße Mobilitätshilfen in Form eines Rollstuhls sind beispielsweise aus der EP 2 213 270 A1, der CA 2 418 491 und der WO 2014/020378 A1 bekannt. Das erste Rahmenelement ist in diesem Fall Teil der Rückenlehne des entsprechenden Rollstuhls, während das zweite Rahmenelement Teil der Sitzfläche ist.

Aus der US 4,934,722 A und der EP 2 106 777 A2 sind Rollstühle bekannt, bei denen zwei Rahmenelemente durch eine Verriegelungseinrichtung in einer Transportstellung und einer Gebrauchsstellung gegeneinander verriegelbar sind. Um ein versehentliches Verschwenken zu verhindern, sind in der FR 2 948 559 A1 zwei entsprechende Verriegelungselemente vorhanden.

Aus der CH 689 177 A5 ist ein Rollstuhl bekannt, bei dem das erste Rahmenelement mit dem zweiten Rahmenelement über ein Scharnier verbunden ist und zwischen den beiden Rahmenelementen zudem ein Verbindungs- und Verschiebebauteil angeordnet ist, in dem sich ein Langloch befindet. Am ersten Bauteil ist ein vorspringender Stift angeordnet, der in das Langloch hineinragt und in diesem verschoben werden kann, wenn die beiden Rahmenelemente um das Scharnier verschwenkt werden.

Um für den Benutzer der Mobilitätshilfe eine möglichst hohe Bequemlichkeit erreichen zu können, ist es von Vorteil, wenn ein Winkel zwischen einer Rückenlehne der Mobilitätshilfe und einer Sitzfläche der Mobilitätshilfe auf mehrere unterschiedliche Winkel eingestellt werden kann, um den individuellen Anforderungen Rechnung tragen zu können. Dies wird beispielsweise in der CA 2 418 491 A1 und der WO 2014/020378 A1 dadurch erreicht, dass das erste Rahmenelement den unterschiedlichen Positionen am Schwenkelement angeordnet werden kann, wodurch im entfalteten Zustand, wenn sich also das Schwenkelement in der Gebrauchsposition befindet, unterschiedliche Winkel zwischen Sitzfläche und Rückenlehne des Rollstuhls erreicht werden. Wird in diesem Fall jedoch das Schwenkelement in die Gebrauchsposition verschoben, ändert sich je nach Position, in der das erste Rahmenelement am Schwenkelement angeordnet ist, das Packmaß der Mobilitätshilfe, so dass nicht immer eine minimale Staugröße erreicht werden kann.

Dies gilt auch für die in der EP 2 213 270 A dargestellte Lösung. Aus dem Stand der Technik sind daher Lösungen bekannt, bei denen das erste Rahmenelement nur in einer Position am Schwenkelement angeordnet werden kann oder das Schwenkelement einstückig mit dem ersten Rahmenelement ausgebildet ist. In diesem Fall lässt sich das Schwenkelement in unterschiedlichen Positionen relativ zum zweiten Rahmenelement, das in der Regel Teil der Sitzfläche ist, arretieren, so dass auf diese Weise verschiedene Einstellungen des Rückenlehnen-Winkels erreicht werden können. Nachteilig ist jedoch, dass eine einmal getroffene Einstellung verloren geht, sobald die Mobilitätshilfe zusammengefaltet und das Schwenkelement um die Schwenkachse relativ zum zweiten Rahmenelement in die Transportstellung verschwenkt wird.

Der Erfindung liegt daher die Aufgabe zugrunde, eine gattungsgemäße Mobilitätshilfe so weiter zu entwickeln, dass ein möglichst kleines Packmaß erreicht wird, Informationen über eingestellte Winkel zwischen den beiden Rahmenelementen in der Gebrauchsposition des Schwenkelementes beim Verschwenken des Elementes nicht verloren gehen und gleichzeitig ein versehentliches Öffnen oder Entfalten der Mobilitätshilfe sicher vermieden wird.

Die Erfindung löst die gestellte Aufgabe durch eine gattungsgemäße Mobilitätshilfe gemäß dem Oberbegriff des Anspruchs 1, die sich dadurch auszeichnet, dass das erste Rahmenelement in verschiedenen Positionen lösbar an dem Schwenkelement befestigbar ist, wodurch sich ein Winkel zwischen den beiden Rahmenelementen in der Gebrauchsposition des Schwenkelementes einstellen lässt und wobei diese Position keinen Einfluss auf die Position des ersten Rahmenelementes relativ zu dem zweiten Rahmenelement hat, wenn sich das Schwenkelement in der Transportstellung befindet.

Eine erfindungsgemäße Mobilitätshilfe verfügt folglich über zwei Verriegelungseinrichtungen, von denen jeweils eine in der Gebrauchsposition und in der Transportposition des Schwenkelementes wirksam ist. Durch diese Trennung wird, anders als im Stand der Technik, erreicht, dass genau die Bauteile relativ zueinander verriegelt werden, auf deren Relativposition es jeweils ankommt.

Befindet sich das Schwenkelement in der Gebrauchsposition wird diese dadurch definiert, dass die erste Verriegelungseinrichtung wirksam ist. Das Schwenkelement wird relativ zum zweiten Rahmenelement verriegelt. Dies bedeutet, dass eine weitere Verschwenkung des Schwenkelementes relativ zu dem zweiten Rahmenelement ohne ein Lösen der ersten Verriegelungseinrichtung nicht möglich ist. Für die Gebrauchsposition ist es daher unerheblich, in welcher Relativ-Orientierung oder -Position sich das erste Rahmenelement relativ zum zweiten Rahmenelement befindet. Ein einmal eingestellter Winkel beispielsweise zwischen Rückenlehne und Sitzfläche der Mobilitätshilfe ist daher für das Erreichen der Gebrauchsposition unerheblich. Unabhängig von der Orientierung oder Position, in der das erste Rahmenteil am Schwenkelement befestigt ist, wird die Gebrauchsposition immer dann erreicht, wenn die erste Verriegelungseinrichtung verriegelt und wirksam ist.

Im Gegensatz dazu wird die Transportposition immer dann erreicht, wenn die zweite Verriegelungseinrichtung verriegelt und wirksam ist. In diesem Fall kommt es jedoch nicht auf eine Orientierung oder Positionierung des Schwenkelementes relativ zum zweiten Rahmenelement an, wie dies bei der Gebrauchsposition der Fall ist, sondern auf eine Positionierung des ersten Rahmenelementes relativ zum zweiten Rahmenelement. Da diese beiden Rahmenelemente, beispielsweise Sitzfläche und Rückenlehne, zusammengefaltet und auf ein möglichst kleines Packmaß gebracht werden sollen, ist ein Winkel zwischen den beiden Rahmenelementen in der Gebrauchsposition für die Transportposition unerheblich. Daher wird durch die erfindungsgemäße Ausgestaltung der Mobilitätshilfe erreicht, dass die Transportposition durch das Verriegeln der zweiten Verriegelungseinrichtung definiert ist, was immer dann geschieht, wenn sich die beiden Rahmenelemente in der gewünschten Relativposition zueinander befinden.

Erfindungsgemäß ist das erste Rahmenelement in unterschiedlichen Positionen lösbar an dem Schwenkelement befestigbar. Auf diese Weise lässt sich ein Winkel zwischen den beiden Rahmenelementen in der Gebrauchsposition des Schwenkelementes einstellen. Wie bereits dargelegt wird die Gebrauchsposition durch eine vorbestimmte Relativposition des Schwenkelementes relativ zum zweiten Rahmenteil definiert. Die Anordnung des ersten Rahmenteils am Schwenkelement ist davon völlig unabhängig und kann in dieser bevorzugten Ausgestaltung frei eingestellt werden. Durch die Lösbarkeit der Verbindung lässt sich auch nachträglich ein Winkel zwischen den beiden Rahmenelementen, beispielsweise Sitzfläche und Rückenlehne, frei einstellen.

Erfindungsgemäß hat die Position, in der das erste Rahmenelement am Schwenkelement befestigt ist, jedoch keinen Einfluss auf die Position des ersten Rahmenelementes relativ zu dem zweiten Rahmenelement, wenn sich das Schwenkelement in der Transportstellung befindet. Dies bedeutet, dass in der Transportstellung das erste Rahmenelement immer die gleiche Position relativ zum zweiten Rahmenelement einnimmt. Dadurch wird gewährleistet, dass unabhängig von der Position des ersten Rahmenelementes relativ zum Schwenkelement immer der gleiche, vorzugsweise der kleinste, Bauraum erreicht wird.

Die Position, in der das erste Rahmenelement am Schwenkelement befestigbar ist, ist beispielsweise in mehreren Stufen einstellbar. Dies kann beispielsweise durch an einem der beiden Bauteile vorhandene Bohrungen oder Löcher und dazu korrespondiert ausgebildete Stifte oder Bolzen am anderen Bauteil erreicht werden.

Alternativ dazu ist vorteilhafterweise die Position, in der das erste Rahmenelement an dem Schwenkelement befestigbar ist, stufenlos einstellbar. Dies kann beispielsweise durch ein Langloch an einem der zu verbindenden Bauteile und einen Stift an jeweils anderen Bauteil erreicht werden, der in diesem Langloch bewegbar ist, wenn beispielsweise das erste Rahmenelement relativ zum Schwenkelement um eine Schwenkachse verschwenkt wird. Über eine Klemmeinrichtung, beispielsweise eine Schraube und eine Mutter, lassen sich die beiden Bauteile in jeder gewünschten Position aneinander festlegen. Auch in diesem Fall ist die Relativposition des ersten Rahmenelementes relativ zum Schwenkelement weder für die Definition der Gebrauchsposition noch für die Definition der Transportposition von Bedeutung. Während für die Gebrauchsposition eine Positionierung des Schwenkelementes relativ zum zweiten Rahmenelement erreicht werden muss, ist für die Definition der Transportposition eine vorbestimmte Positionierung des ersten Rahmenelementes relativ zum zweiten Rahmenelement von Bedeutung.

In einer bevorzugten Ausgestaltung wird die erste Verriegelungseinrichtung und die zweite Verriegelungseinrichtung durch eine Betätigungseinrichtung gelöst. Diese kann beispielsweise ein Zugelement sein, auf das eine Zugkraft ausgeübt wird, um die erste Verriegelungseinrichtung und/oder die zweite Verriegelungseinrichtung zu lösen. In einer besonders einfach zu handhabenden Ausgestaltung der Mobilitätshilfe werden die erste Verriegelungseinrichtung und die zweite Verriegelungseinrichtung durch die gleiche Betätigungseinrichtung gelöst. Der Benutzer der Mobilitätshilfe muss dann nicht unterscheiden, welches Betätigungselement er betätigen muss, um die jeweils gewünschte Verriegelungseinrichtung zu entriegeln und das Schwenkelement aus der Gebrauchsstellung in die Transportstellung oder umgekehrt zu überführen. Daher ist eine Fehlbedienung auf diese Weise nahezu ausgeschlossen.

Das Zugelement kann in Form eines Drahtes eines Bowdenzuges, eines Bandes oder eines Seiles ausgebildet sein. Wichtig ist lediglich, dass für das Zugelement ein Material gewählt wird, das Zugkräfte übertragen kann. Selbstverständlich ist auch jede andere Betätigungseinrichtung, durch die eine Verriegelungseinrichtung entriegelt werden kann, denkbar.

Vorteilhafterweise weist die erste Verriegelungseinrichtung zueinander korrespondierende Verriegelungselemente auf, die an dem Schwenkelement und an dem zweiten Rahmenelement angeordnet sind. Sobald sich das Schwenkelement in der Gebrauchsstellung befindet greifen diese Verriegelungselemente ineinander ein. Dabei kann es sich beispielsweise um Rast- oder Schnappelemente handeln, die in dafür vorgesehene Ausnehmungen oder Hinterschneidungen eingreifen.

Vorteilhafterweise verfügt die zweite Verriegelungseinrichtung über zueinander korrespondierende Verriegelungselemente, die an dem ersten Rahmenelement und an dem zweiten Rahmenelement angeordnet sind. Auch dies kann über Rast- oder Schnappelemente oder über Formschlusselement erreicht werden, die bei Erreichen der Transportstellung des Schwenkelementes miteinander in Eingriff kommen und so eine Verriegelung bewirken.

Vorteilhafterweise sind die Verriegelungselemente der ersten Verriegelungseinrichtung und/oder die Verriegelungselemente der zweiten Verriegelungseinrichtung Formschlusselemente.

Vorteilhafterweise ändert sich die Position, in der das erste Rahmenelement an dem Schwenkelement befestigt ist, nicht, wenn das Schwenkelement aus der Gebrauchsposition in die Transportposition oder umgekehrt gebracht wird. Dies hat zur Folge, dass eine einmal eingestellte Position, in der das erste Rahmenelement am Schwenkelement befestigt ist, erhalten bleibt. Die individuelle Einstellung auf die Wünsche und Ansprüche des Benutzers der Mobilitätshilfe bleibt also erhalten.

Vorzugsweise ist das Schwenkelement relativ zu dem zweiten Rahmenelement in mehrere unterschiedliche Transportpositionen bringbar. Vorzugsweise ist die zweite Verriegelungseinrichtung so eingerichtet, dass sie in mehreren unterschiedlichen Transportstellungen das erste Rahmenelement relativ zu dem zweiten Rahmenelement verriegelt. Selbstverständlich ist es jedoch auch möglich, mehrere zweite Verriegelungseinrichtungen vorzusehen, die jeweils in einer oder mehrerer der genannten Transportstellungen für die Verriegelung des ersten Rahmenelementes relativ zu dem zweiten Rahmenelement sorgen.

In einer bevorzugten Ausgestaltung ist an dem ersten Rahmenelement eine Rückenlehne der Mobilitätshilfe und an dem zweiten Rahmenelement eine Sitzfläche der Mobilitätshilfe angeordnet. Alternativ dazu ist umgekehrt am ersten Rahmenelement die Sitzfläche und am zweiten Rahmenelement die Rückenlehne der Mobilitätshilfe angeordnet.

Mit Hilfe der beiliegenden Figuren wird nachfolgend ein Ausführungsbeispiel der vorliegenden Erfindung näher erläutert. Es zeigt:
- Figur 1: - die schematische Schnittdarstellung durch einen Teil einer Mobilitätshilfe gemäß einem ersten Ausführungsbeispiel der vorliegenden Erfindung in der Gebrauchsposition,
- Figur 2: - eine schematische 3D-Ansicht der in Figur 1 dargestellten Situation,
- Figur 3: - die Darstellung aus Figur 1 in der Transportposition,

- Figur 4: - die Darstellung aus Figur 2 in der Transportposition,
- Figur 5: - die schematische Darstellung eines Schwenkelementes und
- Figuren 6 und 7: - ein Teil eines ersten Rahmenelementes und ein Schwenkelement, die in unterschiedlichen Position an einander angeordnet sind.

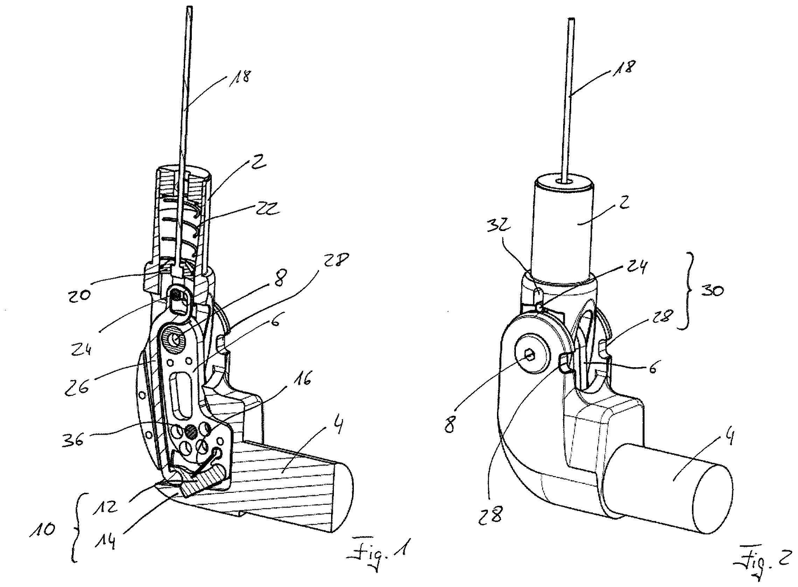

Figur 1 zeigt die schematische Darstellung eines Ausschnittes aus einer Mobilitätshilfe gemäß einem ersten Ausführungsbeispiel der vorliegenden Erfindung. Man erkennt einen Teil eines ersten Rahmenelementes 2 und eines zweiten Rahmenelementes 4. Dazwischen befindet sich ein Schwenkelement 6, das um eine Schwenkachse 8 am zweiten Rahmenelement 4 schwenkbar gelagert ist. Figur 1 zeigt die Situation, bei der sich das Schwenkelement in der Gebrauchsposition befindet. In diesem Fall ist folglich eine erste Verriegelungseinrichtung 10 wirksam. Sie verfügt im gezeigten Ausführungsbeispiel über einen Rasthaken 12, der an einem dafür vorgesehenen Rastanschlag 14 anliegt. Der Rastanschlag 14 ist Teil des zweiten Rahmenelementes 4, während der Rasthaken 12 am Schwenkelement 6 befestigt ist. Über ein Federelement 16, das ebenfalls am Schwenkelement 6 angeordnet ist, wird der Rasthaken 12 in die in Figur 1 gezeigte Position vorgespannt.

Ein Verschwenken des Schwenkelementes 6, an dem sich das erste Rahmenelement 2 befindet, relativ zum zweiten Rahmenelement 4 ist in der gezeigten Position nicht möglich, da es durch den Rasthaken 12, der am Rastanschlag 14 anliegt, verhindert wird.

Die in Figur 1 gezeigte Vorrichtung verfügt über ein Zugelement 18 in Form eines Zugseiles, an dessen unterem Ende sich ein Vorsprung 20 befindet. Im gezeigten Bereich ist das erste Rahmenelement als Hohlzylinder ausgebildet, in dem sich der Vorsprung 20 bewegen kann. Er wird durch eine Schraubenfeder 22 im gezeigten Ausführungsbeispiel nach unten vorbelastet. Wird nun auf das Zugelement 18 eine Zugkraft im gezeigten Ausführungsbeispiel nach oben ausgeübt, verschiebt sich der Vorsprung 20 ebenfalls nach oben gegen die von der Schraubenfeder 22 aufgebrachte Kraft. Am Vorsprung 20 befindet sich ein Stift 24, der mit einem Zughebel 26 verbunden ist, dessen unteres Ende mit dem Rasthaken 12 formschlüssig verbunden ist. Durch die auf das Zugelement 18 aufgebrachte Zugkraft wird folglich neben dem Vorsprung 20 auch der daran befestigte Stift 24 und der Zughebel 26 nach oben bewegt, wodurch der Rasthaken 12 gegen die Kraft des Federelementes 16 verschoben wird und die erste Verriegelungseinrichtung 10 gelöst wird. In diesem Fall ist ein Verschwenken möglich. Statt eines Zughebels 26 kann auch ein anderes Element, beispielsweise ein Bowdenzug, vorhanden sein, durch den die Kraft wie durch den Zughebel 26 übertragen werden kann.

Am zweiten Rahmenelement 4 befindet sich zudem eine Rastausnehmung 28, die Teil einer zweiten Verriegelungseinrichtung ist, die das erste Rahmenelement 2 relativ zum zweiten Rahmenelement 4 verriegelt, wenn sich das Schwenkelement 6 in der Transportstellung befindet. In diesem Fall greift der Stift 24 in die Rastausnehmung 28 ein.

Figur 2 zeigt die Darstellung aus Figur 1 in einer 3D-Ansicht. Die Wirkungsweise der ersten Verriegelungseinrichtung 10 ist in Figur 2 nicht zu erkennen. Man erkennt jedoch den Stift 24 der zweiten Verriegelungseinrichtung 30, der in die dafür vorgesehenen Rastausnehmungen 28 eingreift, sobald sich das Schwenkelement 6 in der Transportstellung befindet. Man erkennt, dass im ersten Rahmenelement 2 eine Verschiebeausnehmung 32 vorhanden ist, die eine Verschiebung des Stiftes 24 nach oben erlaubt. Diese tritt auf, wenn auf das Zugelement 18 eine Zugkraft ausgeübt wird.

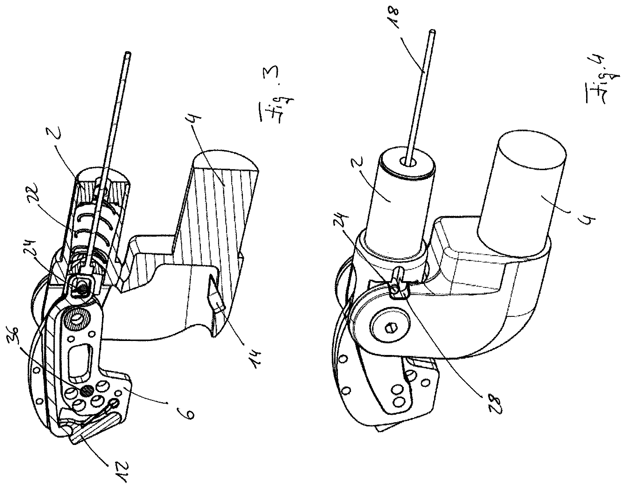

Figur 3 zeigt die Darstellung aus Figur 1, bei der sich nun das Schwenkelement 6 in der Transportposition befindet. Der Rasthaken 12 befindet sich nicht mehr im Eingriff mit dem Rastanschlag 14, so dass die erste Verriegelungseinrichtung 10 nicht wirksam ist.

Figur 4 zeigt die in Figur 3 dargestellte Situation in einer schematischen 3D-Ansicht. In Figur 4 wird deutlich, dass sich der Stift 24 in der dafür vorgesehenen Rastausnehmung 28 befindet und so das erste Rahmenelement 2 relativ zum zweiten Rahmenelement 4 verriegelt. Ein Verschwenken der beiden Rahmenelemente 2, 4 ist nicht möglich. Man erkennt zudem insbesondere in Figur 3, dass eine Position des Schwenkelementes 6 relativ zum ersten Rahmenelement 2 für das Erreichen dieser Transportposition unerheblich ist. Wird nun auf das Zugelement 18 erneut eine Zugkraft ausgeübt, wird, wie in Figur 3 zu erkennen ist, die Schraubenfeder 22 erneut komprimiert und der Stift 24 nach rechts bewegt. Dadurch gerät er außer Eingriff mit der Rastausnehmung 28 und die zweite Verriegelungseinrichtung wird entriegelt.

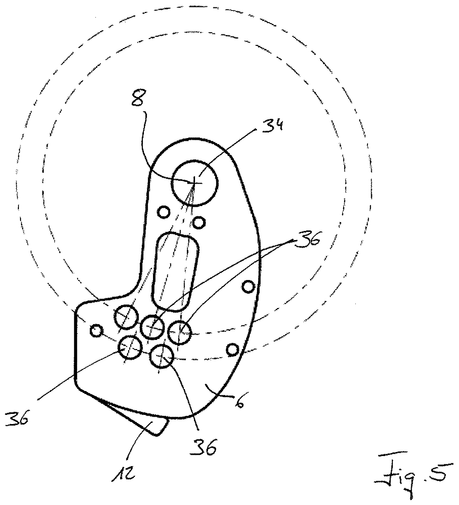

Figur 5 zeigt das Schwenkelement 6 in einer schematischen Darstellung. Man erkennt am unteren Ende den Rasthaken 12, der zum Eingriff mit dem Rasthaken 14 ausgebildet ist. Um das erste Rahmenelement 2 an dem Schwenkelement 6 zu befestigen sind im in Figur 5 gezeigten Ausführungsbeispiel unterschiedliche Positionen möglich. Das Schwenkelement 6 verfügt über eine Hauptbohrung 34 durch die beispielsweise ein Bolzen oder Stift hindurchgeführt wird, um das erste Rahmenelement 2 mit dem Schwenkelement 6 zu verbinden. In der Mitte der Hauptbohrung 34 verläuft in der in Figur 5 gezeigten besonders bevorzugten Ausführungsform die Schwenkachse 8. Dies ist zwar besonders vorteilhaft, jedoch nicht notwendig.

Das Schwenkelement 6 verfügt zudem über Positionierungsbohrungen 36 durch die ebenfalls ein stift- oder bolzenförmiges Element hindurchgeführt werden kann, um das erste Rahmenelement 2 mit dem Schwenkelement 6 zu verbinden. In Abhängigkeit davon, welche der Positionierungsbohrungen 36 dafür verwendet wird, ergibt sich ein leicht unterschiedlicher Winkel zwischen dem Schwenkelement 6 und dem ersten Rahmenelement 2. Man erkennt beispielsweise in Figur 1, das die gekennzeichnete Positionierungsbohrung 36 für die Befestigung des ersten Rahmenelementes 2 am Schwenkelement 6 verwendet wird. Dies ist auch in Figur 3 dargestellt.

Insbesondere in den Figuren 3 und 4 ist zu erkennen, dass die Wahl der jeweiligen Positionierungsbohrung 36, die für die Positionierung des ersten Rahmenelementes 2 verwendet wird, für das Erreichen der Transportstellung des Schwenkelementes 6 völlig unerheblich ist, da es lediglich auf einer Positionierung des ersten Rahmenelementes 2 relativ zum zweiten Rahmenelement 4 ankommt. Eine einmal gewählte Einstellung muss daher nicht gelöst werden, um eine optimale Positionierung der beiden Rahmenelemente 2, 4 in der Transportposition des Schwenkelementes 6 relativ zueinander zu erreichen.

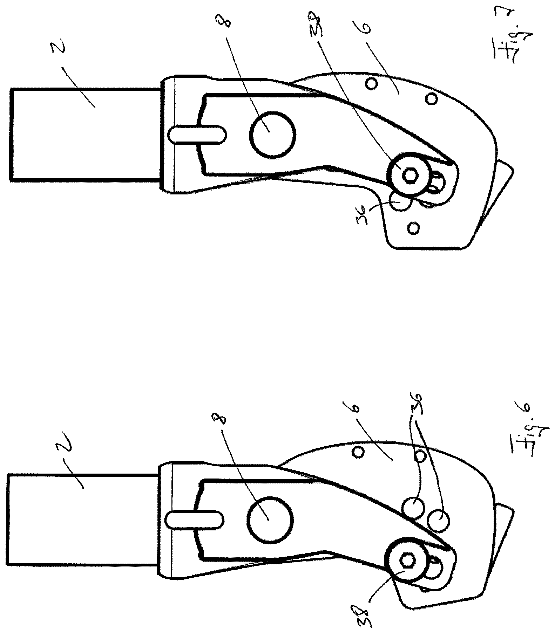

Die Figuren 6 und 7 zeigen schematisch das Schwenkelement 6, an dem sich jeweils das erste Rahmenelement 2 befindet. Durch die schematisch dargestellten Schrauben 38 wird das erste Rahmenelement 2 am Schwenkelement 6 befestigt, indem die jeweilige Schraube 38 durch eine der Positionierungsbohrungen 36 hindurchgeführt wird. Da in den Figuren 6 und 7 verschiedenen Positionierungsbohrungen 36 verwendet wurden, kommt es zu einem leicht unterschiedlichen Winkel der beiden miteinander zu verbindenden Bauteile.

### Bezugszeichenliste:

2 erstes Rahmenelement
4 zweites Rahmenelement
6 Schwenkelement
8 Schwenkachse
10 Verriegelungseinrichtung
12 Rasthaken
14 Rastanschlag
16 Federelement
18 Zugelement
20 Vorsprung
22 Schraubenfeder
24 Stift
26 Zughebel
28 Rastausnehmung
30 zweite Verriegelungseinrichtung
32 Verschiebeausnehmung
34 Hauptbohrung
36 Positionierungsbohrung
38 Schraube

## Patentansprüche

1. Mobilitätshilfe mit
- einem ersten Rahmenelement (2),
- einem zweiten Rahmenelement (4) und
- wenigstens einem Schwenkelement (6), das
mit dem ersten Rahmenelement (2) verbunden ist und an dem zweiten Rahmenelement (4) um eine Schwenkachse (8) schwenkbar gelagert ist,
wobei das Schwenkelement (6) relativ zu dem zweiten Rahmenelement (4) in eine Gebrauchsposition und eine Transportposition bringbar ist, wobei
- eine erste Verriegelungseinrichtung (10) das Schwenkelement (6) relativ zu dem zweiten Rahmenelement (4) verriegelt, wenn sich das Schwenkelement (6) in der Gebrauchsstellung befindet, und
- eine zweite Verriegelungseinrichtung (30) das erste Rahmenelement (2) relativ zu dem zweiten Rahmenelement (4) verriegelt, wenn sich das Schwenkelement (6) in der Transportstellung befindet,
**dadurch gekennzeichnet, dass** das erste Rahmenelement (2) in verschiedenen Positionen lösbar an dem Schwenkelement (6) befestigbar ist, wodurch sich ein Winkel zwischen den beiden Rahmenelementen (2, 4) in der Gebrauchsposition des Schwenkelementes (6) einstellen lässt und wobei diese Position keinen Einfluss auf die Position des ersten Rahmenelementes (2) relativ zu dem zweiten Rahmenelement (4) hat, wenn sich das Schwenkelement (6) in der Transportstellung befindet

2. Mobilitätshilfe nach Anspruch 1, **dadurch gekennzeichnet, dass** die Position, in der das erste Rahmenelement (2) an dem Schwenkelement (6) befestigbar ist, stufenlos einstellbar ist.

3. Mobilitätshilfe nach einem der vorstehenden Ansprüche, **dadurch gekennzeichnet, dass** die erste Verriegelungseinrichtung (10) und die zweite Verriegelungseinrichtung (30) durch eine Betätigungseinrichtung gelöst werden können, wobei die Betätigungseinrichtung vorzugsweise ein Zugelement (18) ist.

4. Mobilitätshilfe nach einem der vorstehenden Ansprüche, **dadurch gekennzeichnet, dass** die erste Verriegelungseinrichtung (10) zueinander korrespondierende Verriegelungselemente (12, 14) aufweist, die an dem Schwenkelement (6) und an dem zweiten Rahmenelement (4) angeordnet sind.

5. Mobilitätshilfe nach einem der vorstehenden Ansprüche, **dadurch gekennzeichnet, dass** die zweite Verriegelungseinrichtung (30) zueinander korrespondierende Verriegelungselemente (24, 28) aufweist, die an dem ersten Rahmenelement (2) und an dem zweiten Rahmenelement (4) angeordnet sind.

6. Mobilitätshilfe nach Anspruch 4 oder 5, **dadurch gekennzeichnet, dass** die Verriegelungselemente (12, 14) der ersten Verriegelungseinrichtung (10) und/oder die Verriegelungselemente (24, 28) der zweiten Verriegelungseinrichtung (30) Formschlusselemente sind.

7. Mobilitätshilfe nach einem der vorstehenden Ansprüche, **dadurch gekennzeichnet, dass** sich die Position, in der das erste Rahmenelement (2) an dem Schwenkelement (6) befestigt ist, nicht ändert, wenn das Schwenkelement (6) aus der Gebrauchsposition in die Transportposition oder umgekehrt gebracht wird.

8. Mobilitätshilfe nach einem der vorstehenden Ansprüche, **dadurch gekennzeichnet, dass** das Schwenkelement (6) relativ zu dem zweiten Rahmenelement (4) in mehrere verschiedenen Transportpositionen bringbar ist.

9. Mobilitätshilfe nach einem der vorstehenden Ansprüche, **dadurch gekennzeichnet, dass** an dem ersten Rahmenelement (2) eine Rückenlehne der Mobilitätshilfe und an dem zweiten Rahmenelement (4) eine Sitzfläche der Mobilitätshilfe oder umgekehrt angeordnet sind.

## Claims

1. Mobility aid comprising
- a first frame member (2),
- a second frame member (4) and
- at least one pivot member (6) that is connected to the first frame member (2) and is mounted on the second frame member (4) so as to be pivotable about a swivel axis (8),
it being possible for the pivot member (6) to be brought into a use position and a transport position relative to the second frame member (4),
wherein
- a first locking means (10) locks the pivot member (6) relative to the second frame member (4) when the pivot member (6) is in the use position, and
- a second locking means (30) locks the first frame member (2) relative to the second frame member (4) when the pivot member (6) is in the transport position, **characterized in that** the first frame member (2) can be releasably fastened to the pivot member (6) in various positions, whereby an angle between the two frame members (2,4) in the use position of the pivot member (6) can be set and said position not having any influence on the position of the first frame member (2) relative to the second frame member (4) when the pivot member (6) is in the transport position.

2. . Mobility aid according to claim 1, **characterized in that** the position in which the first frame member (2) can be fastened to the pivot member (6) can be set in a stepless manner.

3. Mobility aid according to any of the preceding claims, **characterized in that** the first locking means (10) and the second locking means (30) can be released by an actuation means, the actuation means preferably being a tension element (18).

4. Mobility aid according to any of the preceding claims, **characterized in that** the first locking means (10) comprises mutually corresponding locking elements (12, 14) which are arranged on the pivot member (6) and on the second frame member (4).

5. Mobility aid according to any of the preceding claims, **characterized in that** the second locking means (30) comprises mutually corresponding locking elements (24, 28) which are arranged on the first frame member (2) and on the second frame member (4).

6. Mobility aid according to either claim 4 or claim 5, **characterized in that** the locking elements (12, 14) of the first locking means (10) and/or the locking elements (24, 28) of the second locking means (30) are form-locking elements.

7. Mobility aid according to any of the preceding claims, **characterized in that** the position in which the first frame member (2) is fastened to the pivot member (6) does not change when the pivot member (6) is moved out of the use position and into the transport position or vice versa.

8. Mobility aid according to any of the preceding claims, **characterized in that** the pivot member (6) can be brought into a plurality of different transport positions, relative to the second frame member (4).

9. Mobility aid according to any of the preceding claims, **characterized in that** a backrest of the mobility aid is arranged on the first frame member (2) and a sitting surface of the mobility aid is arranged on the second frame member (4), or vice versa.

## Revendications

1. Aide à la mobilité, comprenant
- un premier élément de cadre (2),
- un deuxième élément de cadre (4) et
- au moins un élément pivotant (6) qui
est relié au premier élément de cadre (2) et qui
est monté sur le deuxième élément de cadre (4) de manière à pouvoir pivoter autour d'un axe de pivotement (8),
dans laquelle
l'élément pivotant (6) peut être amené dans une position d'utilisation et dans une position de transport par rapport au deuxième élément de cadre (4),
un premier dispositif de verrouillage (10) verrouille l'élément pivotant (6) par rapport au deuxième élément de cadre (4) lorsque l'élément pivotant (6) se trouve dans la position d'utilisation, et
un deuxième dispositif de verrouillage (30) verrouille le premier élément de cadre (2) par rapport au deuxième élément de cadre (4) lorsque l'élément pivotant (6) se trouve dans la position de transport,
**caractérisée en ce que**
le premier élément de cadre (2) peut être fixé de manière amovible à l'élément pivotant (6) dans différentes positions, ce qui permet de régler un angle entre les deux éléments de cadre (2, 4) dans la position d'utilisation de l'élément pivotant (6), et cette position n'a pas d'influence sur la position du premier élément de cadre (2) par rapport au deuxième élément de cadre (4) lorsque l'élément pivotant (6) se trouve dans la position de transport.

2. Aide à la mobilité selon la revendication 1,
**caractérisée en ce que** la position dans laquelle le premier élément de cadre (2) peut être fixé à l'élément pivotant (6) est réglable en continu.

3. Aide à la mobilité selon l'une des revendications précédentes,
**caractérisée en ce que** le premier dispositif de verrouillage (10) et le deuxième dispositif de verrouillage (30) peuvent être libérés par un dispositif d'actionnement, le dispositif d'actionnement étant de préférence un élément de traction (18).

4. Aide à la mobilité selon l'une des revendications précédentes,
**caractérisée en ce que** le premier dispositif de verrouillage (10) comporte des éléments de verrouillage (12, 14) qui se correspondent et qui sont disposés sur l'élément pivotant (6) et sur le deuxième élément de cadre (4).

5. Aide à la mobilité selon l'une des revendications précédentes,
**caractérisée en ce que** le deuxième dispositif de verrouillage (30) comporte des éléments de verrouillage (24, 28) qui se correspondent et qui sont disposés sur le premier élément de cadre (2) et sur le deuxième élément de cadre (4).

6. Aide à la mobilité selon la revendication 4 ou 5,
**caractérisée en ce que** les éléments de verrouillage (12, 14) du premier dispositif de verrouillage (10) et/ou les éléments de verrouillage (24, 28) du deuxième dispositif de verrouillage (30) sont des éléments en coopération de forme.

7. Aide à la mobilité selon l'une des revendications précédentes,
**caractérisée en ce que** la position dans laquelle le premier élément de cadre (2) est fixé à l'élément pivotant (6) ne change pas lorsque l'élément pivotant (6) est amené de la position d'utilisation à la position de transport, ou inversement.

8. Aide à la mobilité selon l'une des revendications précédentes,
**caractérisée en ce que** l'élément pivotant (6) peut être amené dans plusieurs positions de transport différentes par rapport au deuxième élément de cadre (4).

9. Aide à la mobilité selon l'une des revendications précédentes,
**caractérisée en ce qu'**un dossier de l'aide à la mobilité est disposé sur le premier élément de cadre (2) et une assise de l'aide à la mobilité est disposée sur le deuxième élément de cadre (4), ou inversement.
